# EUROPÄISCHE PATENTANMELDUNG

(11) **EP 3 306 763 A1**
(43) Veröffentlichungstag der Anmeldung: **11.04.2018**
(21) Anmeldenummer: 17195156.9
(22) Anmeldetag: 06.10.2017
(51) Int. Cl.: H02G 3/06, H02G 3/08

(54) **VORRICHTUNG FÜR ELEKTROINSTALLATIONEN**

(30) Priorität: 06.10.2016 CH 13362016
(71) Anmelder: Morach, Christoph, 8335 Hittnau (CH)
(72) Erfinder: Morach, Christoph, 8335 Hittnau (CH)
(74) Vertreter: Frei Patent Attorneys

(57) **Zusammenfassung**

Die Vorrichtung für Elektroinstallationen weist mindestens ein Rastelement (1) und mindestens einen Anschlusskanal (21) auf. Der Anschlusskanal (21) ist zum Einführen eines Installationsrohrs (3), insbesondere eines gerillten Installationsrohrs (3) vorgesehen. In den Anschlusskanal (21) ist ein Installationsrohr (3), insbesondere ein gerilltes Installationsrohr (3), einführbar und der Innendurchmesser des Anschlusskanals (21) ist an den Aussendurchmesser des Installationsrohrs angepasst. Das Rastelement (1) weist eine erste Rastkralle (11a) und eine zweite Rastkralle (11b) zur einrastenden Befestigung eines Installationsrohrs (3) im Anschlusskanal (21) auf. Das Rastelement (1) ist separat vom Anschlusskanal (21) ausgebildet. Das heisst der Anschlusskanal (21) und das Rastelement (1) sind einzeln und unabhängig voneinander herstellbar. Des Weiteren kann das Rastelement (1) in den Anschlusskanal (21) einschiebbar sein. Das Rastelement (1) weist einen proximalen Endbereich (10a), einen distalen Endbereich (10c) und einen Abstützbereich (10b) auf. Der Abstützbereich (10b) ist dabei entlang einer Längsachse des Rastelements (1) zwischen dem proximalen Endbereich (10a) und dem distalen Endbereich (10c) angeordnet. Im eingeführten Zustand des Rastelements (1) im Anschlusskanal (21) ist der distale Endbereich (10c) und/oder der proximale Endbereich (10a) mindestens abschnittweise von einer Innenfläche des Anschlusskanals (21) beabstandet.

## Beschreibung

Die Erfindung bezieht sich auf das Gebiet der Installationstechnik, sie bezieht sich insbesondere auf eine Vorrichtung für Elektroinstallationen.

Elektroinstallationsdosen weisen im Regelfall eine Rohreinführung auf. Die Rohreinführung weist häufig einen Rohreinführungsstutzen zur Aufnahme eines Installationsrohres auf. Um ein Herausrutschen des Installationsrohrs aus dem Rohreinführungsstutzen zu verhindern, können Elektroinstallationsdosen eine Raste aufweisen, welche in einer Rille eines geriffelten Installationsrohrs einrasten kann. Eine solche Raste ist mit der Elektroinstallationsdose verbunden und häufig aus den gleichen Kunststoff gefertigt. Aus Kostengründen bestehen Elektroinstallationsdosen grösstenteils aus günstigem Kunststoff, der eine beschränkte Festigkeit aufweist. Aufgrund der geringen Festigkeit der Elektroinstallationsdose und der Raste kann es insbesondere bei extremen Verhältnissen (z.B. Hitze im Sommer) zu einem Lösen der Verbindung zwischen der Elektroinstallationsdose und dem Installationsrohr kommen. Ein solches Lösen kann zu einem Versagen der gesamten Elektroinstallation führen. Um ein solches Lösen zu vermeiden, werden in der Praxis häufig zusätzliche Befestigungsmittel verwendet um das Installationsrohr an der Elektroinstallationsdose beispielsweise anzubinden. Ein solches Anbinden ist aufwendig und erfordert neben zusätzlichen Befestigungsmitteln auch zusätzliche zeitraubende Arbeits- und Kontrollaufwand.

Bei einer Herstellung der Elektroinstallationsdose wird vielfach auf ein Spritzgussverfahren zurückgegriffen, wobei die Anformung einer Raste spezielle Entformungstechniken verlangt, die die Ausgestaltung der Rasten einschränkt oder die Herstellung verteuert.

EP 1 737 094 zeigt Unterputzdosen mit einer hohlzylindrischen Muffe, welche nach innen vorspringenden Haltemittel für ein Wellrohr aufweist. Die Muffe mit den Haltemitteln ist so ausgebildet, dass an der gleichen Muffe Wellrohre mit zwei unterschiedlichen Aussendurchmessern angeschlossen werden können.

Um ein Installationsrohr in einer Elektroinstallationsdose sicher zu fixieren wird beispielsweise in EP 2 849 298 vorgeschlagen ein separates Haltemittel zu verwenden, um ein Lösen auch unter extremen Bedingungen zu verhindern. Fest in der Elektroinstallationsdose fixierte Installationsrohre können jedoch nur schwer wieder gelöst werden. Dadurch kann eine Fehlpositionierung des Installationsrohrs nur erschwert wieder rückgängig gemacht werden.

Es ist deshalb Aufgabe der Erfindung, eine Vorrichtung für Elektroinstallationen zu schaffen, welche ein Lösen einer Verbindung zwischen der Vorrichtung und einem Installationsrohr auch unter extremen Bedingungen verhindert und/oder ein gezieltes Lösen des Installationsrohrs aus der Vorrichtung zu ermöglichen und/oder ein vereinfachtes Befestigen des Installationsrohrs in der Vorrichtung.

Diese Aufgabe löst eine Vorrichtung mit mindestens einem Anschlusskanal und mindestens einem Rastelement, sowie ein Rastelement und ein Anschlusskanal.

Die Vorrichtung für Elektroinstallationen weist mindestens ein Rastelement und mindestens einen Anschlusskanal auf. Der Anschlusskanal ist zum Einführen eines Installationsrohrs, insbesondere eines gerillten Installationsrohrs, eingerichtet. In den Anschlusskanal ist ein Installationsrohr, insbesondere ein gerilltes Installationsrohr, einführbar und der Innendurchmesser des Anschlusskanals ist an den Aussendurchmesser des Installationsrohrs angepasst. Das Rastelement weist eine erste Rastkralle und eine zweite Rastkralle zur einrastenden Befestigung eines Installationsrohrs im Anschlusskanal auf. Das Rastelement ist separat vom Anschlusskanal ausgebildet. Das heisst der Anschlusskanal und das Rastelement sind einzeln und unabhängig voneinander herstellbar. Des Weiteren kann das Rastelement in den Anschlusskanal einschiebbar bzw. einführbar sein. Das Rastelement weist einen proximalen Endbereich, einen distalen Endbereich und einen Abstützbereich auf. Der Abstützbereich ist dabei entlang einer Längsachse des Rastelements zwischen dem proximalen Endbereich und dem distalen Endbereich angeordnet. Im eingeführten Zustand des Rastelements im Anschlusskanal ist der distale Endbereich und/oder der proximale Endbereich von einer Innenfläche des Anschlusskanals beabstandet ist. Der distale Endbereich und/oder der proximale Endbereich kann dabei mindestens teilweise bzw. mindestens abschnittsweise von der Innenfläche des Anschlusskanals beabstandet sein.

Dadurch wird es möglich, dass das Installationsrohr durch ein Einrasten an der Rastkralle relativ zum Rastelement und damit zum Anschlusskanal fixiert werden kann. Durch das Einrasten wird das Installationsrohr mechanisch fixiert und auch bei extremen Bedingungen wird ein Lösen der Fixierung unterbunden. Zusätzlich kann durch die Beabstandung von Rastelement und Anschlusskanal eine Federung bzw. Ausweichbewegung des distalen und/oder der proximalen Endbereichs ermöglicht werden. Diese Federungsmöglichkeit und/oder Ausweichmöglichkeit des Rastelements erlaubt ein vereinfachtes Befestigen des Installationsrohrs im Anschlusskanal beispielsweise durch federnde Verringerung des Abstandes zwischen Anschlusskanal und Rastelement, insbesondere zwischen dem proximalen Endbereich oder distalen Endbereich und dem Anschlusskanal. Dabei können Rillen des Installationsrohrs die Befestigung im Anschlusskanal vereinfachen und mindesten eine der Rastkrallen in eine Rille des Installationsrohrs einrasten und so eine einfache Befestigung des Installationsrohrs in der Vorrichtung ermöglichen.

Die Längsachse des Rastelements erstreckt sich entlang der Einschubrichtung, in der das Rastelement in den Anschlusskanal eingeschoben bzw. eingeführt wird. Im Wesentlichen kann sich die Längsachse in Längsrichtung des Rastelements erstrecken. Im Regelfall ist die Längsrichtung die Richtung der längsten Ausdehnung des Rastelements. Es sind aber auch Ausführungsformen denkbar die breiter sind als lang.

Im eingeführten bzw. fixierten Zustand des Rastelements im Anschlusskanal ist der distale Endbereich dem Kanalinneren zugewandt bzw. der Einführungsöffnung abgewandt und der proximale Endbereich ist der Einführungsöffnung zugewandt. Dabei passiert der distale Endbereich beim Einschieben des Rastelements in den Anschlusskanal zuerst die Einführungsöffnung und wird dann Richtung Kanalinneres weitergeschoben.

Die beiden Rastkrallen können axial über die Länge des Rastelements beabstandet voneinander angeordnet sein.

Die Vorrichtung kann als Elektroinstallationsdose, Abzweigdose, Lampendose, Verteildose, Rohrmuffe, Rohranschlussteil, Lampenfassung oder Ähnliches ausgestaltet sein. Die Elektroinstallationsdose kann auch als Installationsdose bezeichnet werden.

Die Federungsmöglichkeit und/oder Ausweichmöglichkeit des Rastelements können dadurch unterstützt werden, dass die Rastkrallen unabhängig voneinander je an einer Zunge angeordnet sind. Es ist natürlich auch möglich, dass nur eine der Rastkrallen an einer Zunge angeordnet ist. Die Zunge kann als federnder Steg ausgebildet sein. Die Zunge und die Rastkralle können frei angeordnet sein oder von Elementen des Rastelements mindestens teilweise umgeben sein. Die Zunge kann als Teil bzw. Bereich oder Teilbereich des proximalen bzw. des distalen Endbereichs ausgestaltet sein. Die Zunge kann leicht federnd ausgestaltet sein. Dadurch kann ein Einrasten des Installationsrohrs am Rastelement im Anschlusskanal erleichtert werden. Das Zusammenspiel auf Federungsmechanismus und Beabstandung zwischen Rastelement und Anschlusskanal verbessert zum einen das erleichterte Befestigen des Installationsrohrs im Anschlusskanal und zum anderen kann das Lösen des Installationsrohrs aus dem Anschlusskanal erleichtert werden. Mit Hilfe der federnden Eigenschaften der Zunge kann die Rastkralle in die Beabstandung zwischen Rastelement und Anschlusskanal ausweichen.

Die Zunge kann radial verschoben zum proximalen und/oder distalen Endbereich des Rastelements sein. Durch die radiale Verschiebung der Zunge im distalen Endbereich des Rastelements kann eine Zentrierung des Installationsrohrs verbessert werden. Die Zunge kann im eingeführten Zustand des Rastelements im Wesentlichen parallel zur Innenfläche des Anschlusskanals ausgebildet sein.

Im eingeführten Zustand des Rastelements im Anschlusskanal kann der Abstützbereich am Anschlusskanal anliegen, wodurch eine stabilisierte Fixierung des Rastelements im Anschlusskanal unterstützt wird. Der Abstützbereich kann im eingeführten Zustand mindestens teilweise bzw. mindestens abschnittsweise am Anschlusskanal anliegen.

Der proximale Endbereich und/oder der Abstützbereich kann breiter ausgestaltet sein als der distale Endbereich. Der proximale Endbereich kann breiter ausgestaltet sein als der Abstützbereich. Die Breite des Rastelements erstreckt sich im Wesentlichen senkrecht zur Längsachse des Rastelements.

Im befestigten Zustand des Installationsrohrs im Anschlusskanal kann der Abstützbereich vom Installationsrohr beabstandet sein. Dabei kann der Abstützbereich selbstverständlich vom äusseren Durchmesser des gerillten Installationsrohrs beabstandet sein. Auf diese Weise kann ein gezieltes Lösen des

Installationsrohrs aus der Vorrichtung ermöglicht werden, da in diesem Abstand bzw. Hohlraum der Abstützbereich des Rastelements federnd in Richtung des Installationsrohrs bewegt werden kann, wodurch das Rastelement und damit das Installationsrohr vom Anschlusskanal gelöst werden kann. Der Abstützbereich kann im befestigten Zustand des Installationsrohrs im Anschlusskanal mindestens teilweise bzw. mindestens abschnittsweise vom Installationsrohr beabstandet sein,

Die erste Rastkralle kann im proximalen Endbereich und die zweite Rastkralle kann im distalen Endbereich angeordnet sein. Dadurch ist die erste Rastkralle in der Nähe der Einführungsöffnung angeordnet und die zweite Rastkralle ist im Kanalinneren angeordnet.

Das Rastelement kann eine Rohrseite und eine Kanalseite aufweisen, wobei die erste und zweite Rastkralle auf der Rohrseite angeordnet sein können. Die Rohrseite und die Kanalseite sind einander gegenüberliegend auf einander entgegengesetzten Seite der Endbereiche bzw. des Rastelements angeordnet. Die Rohrseite, also die rohrseitige Seite des Rastelements, ist im eingerasteten bzw. befestigten Zustand des Installationsrohrs im Anschlusskanal dem Installationsrohr zugewandt und liegt der Seite gegenüber, die dem Anschlusskanal zugewandt ist, also der Kanalseite. Die erste und/oder zweite Rastkralle kann jeweils auf der Rohrseite der Zunge angeordnet sein, insbesondere kann die Rastkralle rohrseitig von der Zunge abstehen bzw. vorstehen.

Der Abstand zwischen der Rohrseite und der Kanalseite kann der Dicke des Rastelements entsprechen, insbesondere der Abstand zwischen Rohrseite und Kanalseite in einem spezifischen Bereich, wie beispielsweise im distalen und/ oder proximalen Endbereich und/oder im Abstützbereich, kann der Dicke des Rastelements entsprechen.

Die Kanalseite des proximalen und/oder des distalen Endbereich kann vom Anschlusskanal beabstandet sein.

Dabei kann die Beabstandung zwischen dem proximalen Endbereich bzw. dem distalen Endbereich und der Innenfläche des Anschlusskanals auf der Kanalseite mindestens im Bereich der ersten Rastkralle bzw. der zweiten Rastkralle ausgestaltet sein.

Das Rastelement kann derart ausgestaltet sein, dass der proximale und/oder distale Endbereich in die Beabstandung zwischen distalem und/oder proximalem Endbereich und der Innenfläche des Anschlusskanals beim Befestigen des Installationsrohrs im Anschlusskanal mindestens teilweise ausweicht. Dabei kann die Befestigung des Installationsrohrs im Anschlusskanal vereinfacht werden, wobei das Ausweichen durch leicht federnde Eigenschaften des Rastelements erleichtert werden kann.

Eine rohrseitige Fläche des Rastelements, also die Rohrseite, kann mindestens abschnittsweise einer Kreiszylinderfläche entsprechen, also gekrümmt sein. Mit anderen Worten: Das Rastelement beschreibt gemäss einer Ausführungsform rohrseitig einen Kreisbogen. Die Länge des Kreisbogens kann dabei kürzer als der Umfang des Anschlusskanals bzw. des Aussendurchmessers des Installationsrohrs sein. Dadurch wird es möglich, dass sich der Kreisbogen an den Aussendurchmesser des Installationsrohrs anpasst bzw. mit ihm übereinstimmt. Auf diese Weise kann das Rastelement parallel zum Installationsrohr an seiner Aussenwandung entlang verlaufen und so stabilisiert werden.

Das Rastelement kann einen Versatz zwischen dem distalen Endbereich und dem proximalen Endbereich aufweisen. Auf diese Weise kann der Abstand des distalen und/oder des proximalen Endbereichs zum Anschlusskanal beeinflusst werden. Insbesondere kann die Kanalseite einen Versatz vom proximalen zum distalen Endbereich, insbesondere vom Abstützbereich zum distalen Endbereich, aufweisen. Der Versatz kann auch zwischen dem proximalen Endbereich und dem Abstützbereich bzw. zwischen dem distalen Endbereich und dem proximalen Endbereich ausgebildet sein.

Der Versatz zwischen dem distalen Endbereich und dem proximalen Endbereich kann im Wesentlichen senkrecht zur Längsachse des Rastelements ausgebildet sein. Der Versatz kann auch im Wesentlichen senkrecht zur Breite des Rastelements ausgebildet sein. Die Ausrichtung des Versatzes kann auf die Beabstandung des proximalen Endbereichs bzw. des distalen Endbereichs und dem Anschlusskanal beeinflussen.

Die Kanalseite des proximalen Endbereichs kann relative zur Kanalseite des distalen Endbereichs in radialer Richtung des Anschlusskanals versetzt sein. Dies bezieht sich selbstverständlich auf den eingeführten Zustands des Rastelements im Anschlusskanal. Die radiale Richtung des Anschlusskanals ist radial bzw. senkrecht zur Längsachse des Anschlusskanals ausgerichtet. Das heisst, der distale Endbereich des Rastelements kann im eingesetzten Zustand relativ zum proximalen Endbereich radial zur Längsachse des Anschlusskanals (zum Kanalinneren) hin verschoben sein. Die Längsachse des Anschlusskanals erstreckt sich im Wesentlichen entlang der Einschubrichtung des Rastelements in den Anschlusskanal.

Die Kanalseite kann im Wesentlichen eben ausgestaltet sein und der distale Endbereich kann relativ zum proximalen Endbereich parallel verschoben sein. Die Verschiebung kann parallel zur Längsachse des Rastelements zu Rohrseite hin erfolgen. Die Kanalseite kann im Wesentlichen gekrümmt sein und der distale Endbereich kann relativ zum proximalen Endbereich radial verschoben sein.

Des Weiteren kann der Anschlusskanal mindestens eine Aufnahme für das Einführen des separaten Rastelements aufweisen. Dadurch wird es möglich, dass das Rastelement in den Anschlusskanal eingeführt werden kann und in der Aufnahme geführt werden kann.

Die Aufnahme kann so ausgeformt, dass ihre Form zur Form des Rastelements korrespondiert. Dies ist beispielsweise durch mindestens eine Nut an der Aufnahme und einen korrespondierenden Steg am Rastelement realisierbar.

Es ist auch möglich, dass das Rastelement mindestens eine Nut aufweist und die Aufnahme einen korrespondierenden Steg aufweist. Des Weiteren können auch mehrere Nuten mit mehreren Stegen für die Führung des Rastelements in der Aufnahme dienen. Die Nuten können beispielsweise parallel zum Anschlusskanal verlaufen. In anderen Ausführungsformen kann das Rastelement durch eine Drehbewegung am Anschlusskanal fixiert werden. In solchen Ausführungsformen sind die Nuten und/oder Stege gewindeförmig ausgebildet. Es ist auch denkbar, dass das Rastelement mit Hilfe eines Bajonettverschlusses am Anschlusskanal fixiert werden kann.

Die Aufnahme kann einen Anschlag aufweisen und das Rastelement kann eine Schulter aufweisen. Dabei sind die Schulter und der Anschlag so korrespondierend zueinander ausgebildet bzw. geformt, so dass das Einführen und/oder Einschieben des Rastelements durch ein Wechselwirken zwischen dem Anschlag und der Schulter begrenzt wird. Das Wechselwirken einspricht einem Anstossen der Schulter an den Anschlag und begrenzt damit das Einführen des Rastelements in die Aufnahme. Der Anschlag und die Schulter sind dabei so aufeinander abgestimmt, dass beim Einführen des Rastelements bis zum Anschlag das Klemmelement in der Aussparung fixiert wird.

Das Rastelement kann mindestens ein Klemmelement aufweisen, wobei das Rastelement durch das Klemmelement im Anschlusskanal fixierbar ist. Mit anderen Worten: das Klemmelement ist derart ausgestalten, dass es das Rastelement im Anschlusskanal fixieren kann. Dadurch kann das Rastelement im Anschlusskanal eingeklemmt bzw. fixiert werden. Die mechanische Fixierung des Rastelements bewirkt eine weitere Stabilisierung der Installationsrohrfixierung mit Hilfe des ebenfalls am Rastelement eingerasteten Installationsrohrs. Mit anderen Worten: Das Klemmelement bewirkt eine mechanische Fixierung des Rastelements am Anschlusskanal und damit an der Installationsdose. Aufgrund der Fixierung des Installationsrohrs am Rastelement wird die Verbindung zwischen der Installationsdose und dem Installationsrohr weiter verstärkt und ein Lösen der Verbindung noch wirksamer unterbunden.

Der Anschlusskanal kann mindestens eine Aussparung aufweisen, wobei das Rastelement mit Hilfe des Klemmelements in der Aussparung fixierbar ist. Dadurch wird es möglich, dass das Klemmelement in der Aussparung einrastet und so die fixierende Wirkung auf die Verbindung zwischen der Installationsdose und dem Installationsrohr weiter unterstützt wird. Die Aussparung kann als durchgehende Öffnung im Anschlusskanal ausgebildet sein. Die Aussparung kann auch als Sackloch bzw. Ausnehmung ausgebildet sein, wobei das Sackloch bzw. die Ausnehmung zum Rastelement hin geöffnet ist.

Durch das Führen in der Aufnahme kann das Klemmelement direkt zur Aussparung am Anschlusskanal geleitet werden, wo die beiden Elemente (Klemmelement, Aussparung) ineinander einrasten.

Der Anschlusskanal kann einen Vorsprung aufweisen, wobei das Klemmelement und der Vorsprung derart ausgestaltet sein können, dass sie aneinander angreifen und das Rastelement im Anschlusskanal fixieren. Durch das aneinander Angreifen wird die Fixierung des Rastelements im Anschlusskanal unterstützt.

Der Vorsprung kann auf einer zur Einführungsöffnung hin gerichteten Seite eine stetige Gleitfläche aufweist und das Klemmelement kann auf einer zum distalen Endbereich gerichteten Seite eine stetige Gleitfläche aufweist. Die Einführungsöffnung ist dabei die Öffnung des Anschlusskanals, durch die das Installationsrohr eingeführt wird. Die Gleitfläche kann gekrümmt sein. Auf diese Weise kann das Einführen und Fixieren des Rastelements im Anschlusskanal erleichtert werden, das die beiden Gleitflächen die Reibung beim Einführen des Rastelements verringern.

Der Vorsprung kann an der Aussparung des Anschlusskanals angeordnet sein.

In weiteren Ausführungsformen sind Installationsrohre mit unterschiedlichen Durchmessern am Rastelement einrastbar. Das bedeutet zum einen, dass das Rastelement so ausgeformt sein kann, dass es in Anschlusskanäle mit unterschiedlichen Durchmessern einführbar ist. Auf diese Weise können die entsprechenden Installationsrohre mit einem definierten Aussendurchmesser in den Anschlusskanal eingeführt werden und so am Rastelement einrasten. Zum anderen können an einem Rastelement, welches in einem Anschlusskanal eingeführt ist verschieden dicke Installationsrohre (unterschiedliche Aussendurchmesser) eingerastet werden. Das Einrasten in verschieden dicke Installationsrohre kann dabei auf verschiedene Weisen realisiert werden. Zum einen kann das Rastelement in verschiedene Anschlusskanäle mit unterschiedlichen Durchmessern eingeführt werden. Zum anderen ist es möglich, dass der Anschlusskanal unterschiedliche Durchmesser aufweist.

Die Rastkralle und/oder das Klemmelement können/kann eine höhere Festigkeit als der Anschlusskanal aufweisen, dadurch wird es möglich, dass beim Einrasten die Rastkralle bzw. das Klemmelement nicht beschädigt werden. Die erhöhte Festigkeit fördert ausserdem das stabile Fixieren des Installationsrohrs.

Das Rastelement kann in einem Zwei- beziehungsweise Mehrkomponentenspritzgussverfahren hergestellt sein. Dadurch wird es möglich, zum einen die Elemente des Rastelements, die besonders stark beansprucht werden (bspw. Rastkralle und/oder Klemmelement) aus einem strapazierfähigen und stabilen Material auszugestalten. Zum anderen können weniger stark beanspruchte Elemente des Rastelements (bspw. Anschlag oder der "Körper" des Rastelements) aus einem günstigen formstabilen Material ausgestaltet sein.

Die Installationsvorrichtung kann Polyethylen hoher Dichte (PE-HD) aufweisen. Im Gegenzug kann das Rastelement Polycarbonat (PC) und/oder PC-Blend aufweisen. Das Rastelement kann alternativ auch Polyamid (PA) aufweisen.

Das Rastelement kann mindestens teilweise einem Material mit hoher Festigkeit gefertigt sein. Das Rastelement kann aus Metall, insbesondere beispielsweise aus Stahl oder Federstahl gefertigt sein. Insbesondere die stark beanspruchen Elemente des Rastelements können so eine hohe Festigkeit aufweisen.

Das Rastelement kann entlang des inneren Umfangs des Anschlusskanals ausgebildet sein, wobei sich das Rastelement entlang maximal 50%, insbesondere maximal 25 % des inneren Umfangs des Anschlusskanals erstreckt. Dadurch, dass sich das Rastelement entlang des inneren Umfangs des Anschlusskanals erstreckt, wird ein Teil des inneren Umfangs des Anschlusskanals vom Rastelement abgedeckt. Auf diese Weise wird der Anschlusskanal bzw. das Rastelement stabilisiert, wodurch die Fixierung des Installationsrohrs gefördert wird.

Beispielsweise kann der Anschlusskanal in einem ersten Abschnitt einen grösseren Innendurchmesser aufweisen als in einen zweiten Abschnitt. Der erste Abschnitt (grösserer Innendurchmesser) des Anschlusskanals ist in diesem Fall näher zu einer Einführungsöffnung des Anschlusskanals, also der Einführungsöffnung, hin angeordnet als der zweite Abschnitt (kleinerer Innendurchmesser).

Der Übergang vom ersten zum zweiten Abschnitt des Anschlussrohres kann zumindest abschnittsweise fliessend respektive stetig oder kontinuierlich sein, wodurch die Ausbildung von Anstosskanten verhindert werden kann. Auf diese Weise wird es möglich, dass Kabel die durch das Installationsrohr geführt werden, ohne hängen zu bleiben (barrierefrei) in die Installationsdose eingeführt werden können. Der im Wesentlichen fliessende Übergang kann beispielsweise durch eine abgeschrägte Kanalverengung realisiert werden.

In einem eingeführten Zustand des Rastelements im Anschlusskanal kann die erste Rastkralle im ersten Abschnitt und die zweite Rastkralle im zweiten Abschnitt des Anschlusskanals angeordnet sein. Dadurch wird es möglich, das Einrasten des Rastelements in verschieden grosse Installationsrohre zu erleichtern, da die Rastkrallen an die jeweils in den Abschnitten des Anschlusskanals befestigbaren Installationsrohre angepasst werden können. Eine solche Anpassung kann beispielsweise durch die Position der Rastkralle bezüglich des Klemmelements realisiert werden. Die Anpassung kann auch durch eine Variation der Ausdehnung der Rastkrallen verwirklicht werden.

In eingeführten Zustand des Rastelements im Anschlusskanal kann der Versatz des Rastelement im Wesentlichen an der gleichen axialen Position angeordnet sein wie die Kanalverengung und/oder der Übergang. Mit anderen Worten: der Versatz und die Kanalverengung und/oder der Übergang haben im Wesentlichen den gleichen Abstand von der Einführungsöffnung.

Das Rastelement ist also geeignet für und/oder ausgebildet für eine oben beschriebene Vorrichtung für Elektroinstallationen und zur einrastenden Befestigung eines Installationsrohrs in einem Anschlusskanal. Das Rastelement weist eine erste Rastkralle und eine zweite Rastkralle auf. Das Rastelement ist separat von einem Anschlusskanal ausgebildet. Wie bereits beschrieben weist das Rastelement weist einen proximalen Endbereich, einen distalen Endbereich und einen Abstützbereich aufweist. Der Abstützbereich ist entlang der Längsachse des Rastelement zwischen dem proximalen Endbereich und dem distalen Endbereich angeordnet ist. Das Rastelement ist derart ausgestaltet, dass im eingeführten Zustand des Rastelements im Anschlusskanal der distale Endbereich und/oder der proximaler Endbereich von einer Innenfläche des Anschlusskanals beabstandet ist.

Das Rastelement kann die Form eines Plättchens (Plättchenform) aufweisen, wobei das Plättchen auch leicht gebogen sein kann. Insbesondere kann das Rastelement entlang der Längsachse respektive um die Längsachse gebogen sein.

Der Anschlusskanal ist geeignet für eine oben beschriebene Vorrichtung für Elektroinstallationen, der Anschlusskanal kann einen ersten Abschnitt und einen zweiten Abschnitt aufweisen. Der erste Abschnitt weist dabei einen grösseren Innendurchmesser auf als der zweite Abschnitt. Der erste Abschnitt ist näher an einer Einführungsöffnung des Anschlusskanals angeordnet als der zweite Abschnitt. Der Anschlusskanal ist für die Aufnahme eines Rastelements ausgestattet. Der Anschlusskanal kann derart ausgestaltet ist, dass Innenfläche des Anschlusskanal im eingeführten Zustand des Rastelements mindestens abschnittsweise bzw. mindestens teilweise vom Rastelement beabstandet ist.

Im ersten Kanalabschnitt und/oder im zweiten Kanalabschnitt im Bereich eines einzuführenden Rastelements kann der Anschlusskanal eine Ausnehmung aufweisen. Die Ausnehmung kann in radialer Richtung des Anschlusskanals verschoben sein. Die Ausnehmung kann radial relativ zum ersten und/oder zweiten Kanalabschnitt verschoben sein, wobei die Verschiebung relativ zur den Bereichen des Anschlusskanals, die nicht im Bereich des eingeführten Rastelements liegen. Im Bereich des eingeführten Rastelements liegt der Teil, Bereich bzw. Abschnitt kanalseitig des eingeführten Rastelements. Dieser Bereich kann auch Rastelementbereich genannt werden. Im Rastelementbereich ist die Innenfläche des Anschlusskanals also radial verschoben relativ zum Nicht-Rastelementbereich des Anschlusskanals. Dadurch können das Rastelement und die Innenfläche des Anschlusskanals im eingeführten Zustand des Rastelements voneinander beabstandet angeordnet werden.

Der Anschlusskanal kann einen Rastelementbereich zur Aufnahme eines separaten Rastelements aufweisen, wobei der Rastelementbereich einen ersten Rastelementbereich und einen zweiten Rastelementbereich aufweist. Der erste Rastelementbereich ist eingangsöffnungsseitig angeordnet. Das heisst, dass der erste Rastelementbereich im eingeführten Zustand des Rastelements im Anschlusskanal beim proximalen Endbereich des Rastelements angeordnet ist. Der zweite Rastelementbereich kann distal des ersten Rastelementbereichs angeordnet sein. Das heisst, dass der zweite Rastelementbereich in Einschubrichtung des Rastelements hinter dem ersten Rastelementbereich angeordnet ist. Der zweite Rastelementbereich kann im eingeführten Zustand des Rastelements im Anschlusskanal im Bereich des Abstützbereichs und/oder des distalen Endbereichs des Rastelements angeordnet sein. Die Innenfläche des ersten Rastelementbereichs kann in radialer Richtung des Anschlusskanals relativ zur Innenfläche des zweiten Rastelementbereichs verschoben sein. Die Innenfläche des Rastelementbereichs ist die Innenfläche des Anschlusskanals, die im eingeführten Zustand des Rastelements zum Rastelement benachbart ist.

Der erste Rastelementbereich kann einen grösseren Innendurchmesser aufweisen als der zweite Rastelementbereich.

Der Anschlusskanal weist mindestens eine Aufnahme auf, die zur Aufnahme des Rastelements ausgebildet ist. Die Aufnahme und das Rastelement können korrespondieren zueinander ausgebildet sein.

Der Anschlusskanal kann einen Übergang vom ersten Rastelementbereich zum zweiten Rastelementbereich aufweisen. An diesem Übergang kann die radiale Verschiebung als Vorsprung ausgebildet sein.

Der Vorsprung des Anschlusskanals kann derart ausgestaltet sein, dass er an einem Klemmelement eines Rastelements angreifen und ein Rastelement im Anschlusskanal fixieren kann. Der Vorsprung des Anschlusskanals kann auf einer Einführungsöffnung hin gerichteten Seite, also zum ersten Rastelementbereich hin, eine stetige Gleitfläche aufweisen.

Der Anschlusskanal kann einen Übergang der Innenfläche des ersten Rastelementbereichs zur Innenfläche des zweiten Rastelementbereichs aufweisen. Der Übergang kann rechtwinklig und/oder schräg zu diesen Innenflächen ausgebildet sein und/oder kontinuierlich zwischen den beiden Innenflächen verlaufen. Der Übergang kann mit und ohne abgerundeteten Übergängen zu den Innenflächen ausgebildet sein. Der Übergang kann stufenartig ausgebildet sein. Der Übergang kann als Vorsprung des Anschlusskanals (aus Sicht des ersten Rastelementbereichs) und/oder Absenkung (aus Sicht des zweiten Rastelementbereichs), beispielsweise in Form einer Abstufung ausgebildet sein.

Der Übergang derart ausgestaltet sein, dass er an einem Klemmelement eines Rastelements angreifen und ein Rastelement im Anschlusskanal fixieren kann. Der Übergang kann als Vorsprung ausgestaltet sein, wobei der Vorsprung des Anschlusskanals auf einer zur Einführungsöffnung hin gerichteten Seite eine stetige verlaufende Gleitfläche aufweisen kann.

Der Anschlusskanal kann einen Vorsprung aufweisen, wobei das Klemmelement und der Vorsprung des Anschlusskanals derart ausgestaltet sein können, dass sie aneinander angreifen und das Rastelement im Anschlusskanal fixieren.

Beim Übergang vom ersten Rastelementbereich zum zweiten Rastelementbereich kann eine Aussparung im zweiten Rastelementbereich angeordnet ist. An dieser Aussparung kann das Klemmelement des Rastelements angreifen und so das Rastelement im Anschlusskanal fixiert werden.

Der Anschlusskanal kann im Rastelementbereich eine Ausnehmung aufweisen. Die Ausnehmung kann im eingeführten Zustand des Rastelements im Anschlusskanal anschlusskanalseitig des Rastelements angeordnet sein. Die Ausnehmung kann im ersten Kanalabschnitt und/oder im zweiten Kanalabschnitt angeordnet sein. Dadurch kann die Beabstandung zwischen Anschlusskanal und Rastelement ermöglicht werden.

Die Ausnehmung kann derart ausgestaltet sein, dass im eingeführten Zustand des Rastelements im Anschlusskanal ein Abstand zwischen dem Rastelement und dem ersten Rastelementbereich und/oder einem zweiten Rastelementbereich ausgebildet ist. Die Ausnehmung kann in eingeführten Zustand des Rastelements im Bereich des distalen und/oder proximalen Endbereichs des Rastelements ausgebildet bzw. angeordnet sein.

Der Rastelementbereich kann entlang des inneren Umfangs des Anschlusskanals ausgebildet sein, wobei sich der Rastelementbereich entlang maximal 50%, insbesondere maximal 25 % des inneren Umfangs des Anschlusskanals erstreckt. Der Rastelementbereich kann sich radial entlang maximal 50%, insbesondere maximal 25 % des inneren Umfangs des Anschlusskanals erstrecken.

Der Rastelementbereich kann sich über die gesamte Breite des Rastelements erstrecken.

Weitere bevorzugte Ausführungsformen gehen aus den abhängigen Patentansprüchen hervor. Dabei sind Merkmale der Vorrichtungsansprüche sinngemäss miteinander kombinierbar und separat voneinander implementierbar.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Querschnitt durch einen Anschlusskanal mit einem Rastelement und einem dünnen Installationsrohr;
- Figur 2: einen Querschnitt durch einen Anschlusskanal mit einem Rastelement und einem dickes Installationsrohr;
- Figur 3: eine Explosionszeichnung mit Anschlusskanal, Rastelement und Installationsrohr; und
- Figur 4a-c: verschiedene Ansichten einer Installationsdose mit Anschlusskanal und Rastelement.

Grundsätzlich sind in den Figuren gleiche oder analoge Teile mit gleichen Bezugszeichen versehen.

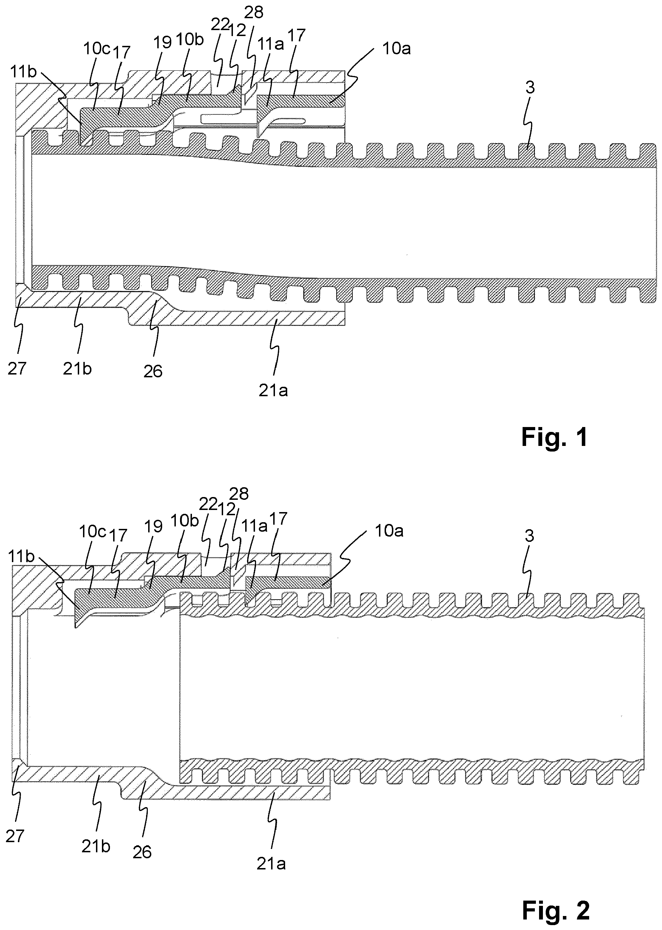

Figur 1 zeigt einen Querschnitt durch einen Anschlusskanal 21 mit einem Rastelement 1 und einem dünnen Installationsrohr 3. Im Gegensatz dazu zeigt Figur 2 einen Querschnitt durch einen Anschlusskanal 21 mit einem in ein dickes Installationsrohr 3 eingerastetes Installationsrohr 3. Dünn bezieht sich dabei auf einen kleinen Aussendurchmesser und dick auf einen grösseren Aussendurchmesser des Installationsrohrs 3.

Der Anschlusskanal 21 weist zwei Abschnitte auf, wobei der erste Abschnitt 21a einen grösseren Innendurchmesser hat als der zweite Abschnitt 21b. Das Rastelement 1 weist zwei Rastkrallen 11 auf, wobei in eingerasteten Zustand die erste Rastkralle 11a im ersten Abschnitt 21a und die zweite Rastkralle 11b im zweiten Abschnitt 21b angeordnet ist. Die beiden Rastkrallen 11 sind entlang der Längsachse des Rastelements 1 voneinander beabstandet angeordnet, wobei die Längsachse entlang der Einführungsrichtung des Rastelements 1 in den Anschlusskanal 21 verläuft. Ein Klemmelement 12 ist zwischen den beiden Rastkrallen 11 angeordnet und ist in einer Aussparung 22 des Anschlusskanals 21 eingerastet.

Das dünne Installationsrohr 3 in Figur 1 weist einen Aussendurchmesser auf, der zum Innendurchmesser des zweiten Abschnitts 21b korrespondiert. Das dünne Installationsrohr 3 ist durch den ersten Abschnitt 21a über eine Kanalverengung 26 hinaus in den zweiten Abschnitt 21b eingeführt. Dabei ist die Kanalverengung 26 stetig, respektive kontinuierlich/fliessend oder als schräge Führung ausgebildet, so dass das Installationsrohr 3 im Wesentlichen ohne Hindernis in den zweiten Abschnitt 21b eingeführt werden kann.

Das Rastelement 1 ist separat vom Anschlusskanal 21 ausgebildet. Das heisst der Anschlusskanal und das Rastelement sind einzeln und unabhängig voneinander herstellbar. Das Rastelement 1 weist einen proximalen Endbereich 10a, einen distalen Endbereich 10c und einen Abstützbereich 10b auf. Der Abstützbereich 10b ist dabei entlang einer Längsachse 15 des Rastelements 1 zwischen dem proximalen Endbereich 10a und dem distalen Endbereich 10c angeordnet. Im eingeführten Zustand des Rastelements 1 im Anschlusskanal 21 ist der distale Endbereich 10c und der proximale Endbereich 10a von einer Innenfläche des Anschlusskanals 21 beabstandet ist.

Das Rastelement 1 weist einen Versatz 19 zwischen dem distalen Endbereich 10c und dem Abstützbereich 10b auf, wodurch die Beabstandung zwischen dem distalen Endbereich 10c und dem zweiten Kanalabschnitt 21b realisiert wird.

Die zweite Rastkralle 11b ist in eine Rille des Installationsrohrs 3 eingerastet und das Klemmelement 12 ist in der Aussparung 22 des Anschlusskanals 21 eingeklemmt. Der Anschlusskanal 21 weist im Bereich der Aussparung 22 einen Vorsprung 28 auf, der in ein Kanalinneres gerichtet ist. Der Vorsprung 28 und das Klemmelement 12 sind derart ausgestaltet sein können, dass sie aneinander angreifen und das Rastelement 1 im Anschlusskanal 21 fixieren. Der Vorsprung 28 weist auf der zur Einführungsöffnung hin gerichteten Seite eine stetige Gleitfläche aufweist und das Klemmelement 12 kann auf der zum distalen Endbereich 10c gerichteten Seite eine stetige Gleitfläche aufweist. Die Einführungsöffnung ist dabei die Öffnung des Anschlusskanals durch die das Installationsrohr eingeführt wird. Die Gleitfläche ist gekrümmt. Das Installationsrohr 3 mit dem dünnen Aussendurchmesser ist somit an der Installationsdose 2 über das Rastelement 1 befestigt.

Im Bereich eines Anstosses 27 weist die Kanalverengung 26 einen Vorsprung auf, welcher das weitere Einführen des Installationsrohrs in den Anschlusskanal begrenzt. Der Anstoss 27 wird in diesem Ausführungsbeispiel durch eine Wand einer Elektroinstallationsdose gebildet.

Das dicke Installationsrohr 3 in Figur 2 weist einen Aussendurchmesser auf, der zum Innendurchmesser des ersten Abschnitts 21a korrespondiert. Das dicke Installationsrohr 3 ist in den ersten Abschnitt 21a hinein eingeführt. Aufgrund der Kanalverengung 26, also der Verkleinerung des Innendurchmessers des Anschlusskanals 21 wird das weitere Einführen des dicken Installationsrohrs 3 in den Anschlusskanal 21 gestoppt.

Das Installationsrohr 3 wird am Anstoss 27 gestoppt, wodurch die Position des Installationsrohrs 3 in Bezug auf den Anschlusskanal 21 und die Installationsdose 2 definiert werden kann. Durch die genaue Positionierung des Installationsrohrs 3 wird die Dichtheit der Installationsdose 2 gegen das Eindringen von Betonwasser unterstützt. Die Dichtheit wird dank der Kanalverengung 26 auch verbessert, weil das Installationsrohr 3 nicht durch ein Einklemmen in der Kanalverengung 26 asymmetrisch deformiert wird. Die erste Rastkralle 11a ist in eine Rille des Installationsrohrs 3 eingerastet und das Klemmelement 12 ist in der Aussparung 22 des Anschlusskanals 21 eingeklemmt. Das Installationsrohr 3 mit dem dicken Aussendurchmesser ist somit an der Installationsdose 2 über das Rastelement 1 befestigt. Die Kanalverengung 26 ermöglicht es, dass beispielsweise Elektrokabel (nicht gezeigt) durch das Installationsrohr 3 hindurch barrierefrei respektive ohne hängen zu bleiben in ein Inneres der Installationsdose 2 eingeführt werden können.

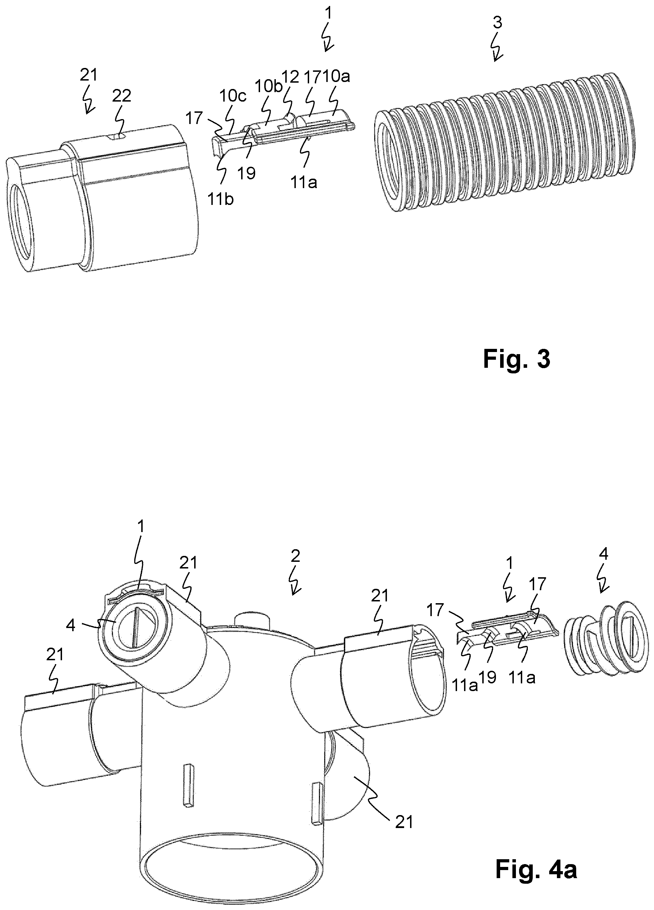

Figur 3 zeigt eine Explosionszeichnung mit Anschlusskanal 21, Rastelement 1 und Installationsrohr 3. Das Rastelement 1 ist in eine Aufnahme 23 (nicht gezeigt) des Anschlusskanals 21 einführbar und kann mit dem Klemmelement 12 in der Aussparung 22 respektive dem Vorsprung 28 angreifen und das Rastelement 1 im Anschlusskanal 21 fixieren. Das Installationsrohr 3 kann im Anschlusskanal 21 befestigt werden, wobei die Rippen des gewellten Installationsrohrs 3 in der ersten Rastkralle 11a und/oder der zweiten Rastkralle 11b einrasten kann. Das Rastelement 1 weist zwischen dem proximalen Endbereich 10a und dem distalen Endbereich 10c einen Versatz 19 auf.

Die Rastkralle 11 ist im eingeführten Zustand des Rastelements 1 im Anschlusskanal 21 auf der rohrseitigen Seite des Rastelements 1 an einer Zunge 17 angeordnet.

Die Rastkrallen 11a,11b sind unabhängig voneinander je an einer Zunge 17 sind. Es ist natürlich auch möglich, dass nur eine der Rastkrallen 11 an einer Zunge 17 angeordnet ist. Die Zunge 17 ist als federnder Steg ausgebildet sein. Die Zunge 17 und die erste Rastkralle 11a sind frei angeordnet. Im Gegensatz dazu ist die zweite Rastkralle 11b und die Zunge 17 mindestens teilweise vom proximalen Endbereich 10a umgeben. Die Zunge 17 ist als Teil bzw. Bereich oder Teilbereich des proximalen bzw. des distalen Endbereichs ausgestaltet. Die Zunge 17 ist leicht federnd ausgestaltet. Dadurch kann ein Einrasten des Installationsrohrs am Rastelement im Anschlusskanal erleichtert werden. Das Zusammenspiel auf Federungsmechanismus und Beabstandung zwischen Rastelement 1 und Anschlusskanal 21 verbessert zum einen das erleichterte Befestigen des Installationsrohrs 3 im Anschlusskanal 21 und zum anderen kann das Lösen des Installationsrohrs 3 aus dem Anschlusskanal 21 erleichtert werden. Mit Hilfe der federnden Eigenschaften der Zunge 17 kann die Rastkralle 11 in die Beabstandung zwischen Rastelement 11 und Anschlusskanal 21 ausweichen.

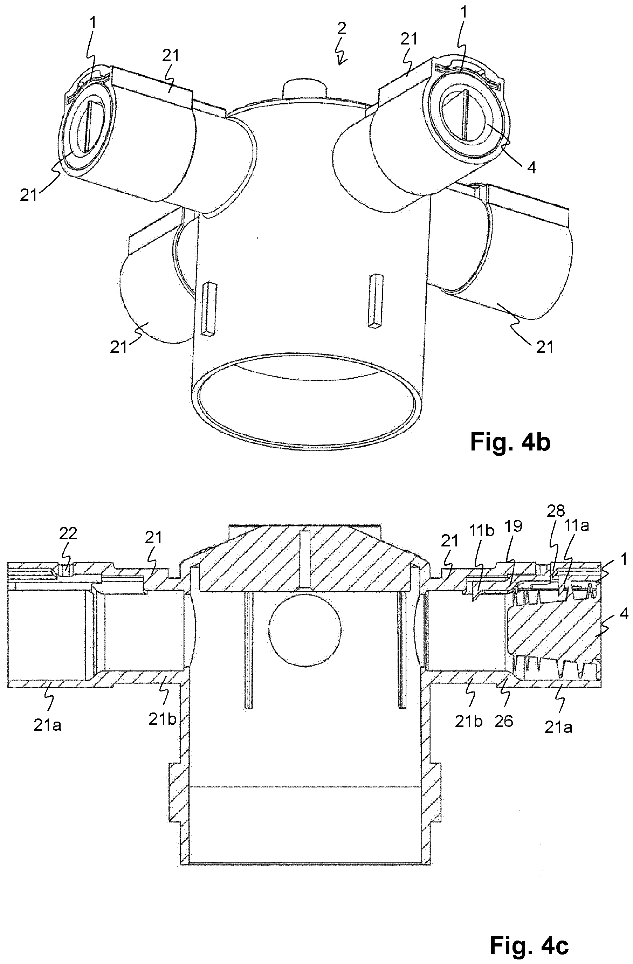

Die Figuren 4a-4c zeigen verschiedene Ansichten einer Installationsdose 2 mit jeweils vier Anschlusskanälen 21 und entsprechenden Rastelementen 1. Installationsdosen 2 müssen beim Einbetonieren vor dem Eindringen von Beton und/oder Betonwasser geschützt werden. In den Figuren 4 wird dieses Eindringen durch den Anschlusskanal 21 mit Hilfe eines Verschlusszapfens 4 verhindert, der kraftschlüssig im Anschlusskanal 21 befestigt und 7 oder an einer der Rastkrallen 11 einrastet werden kann.

Figur 4a zeigt einen eingesetzten Verschlusszapfen 4 im mittleren Anschlusskanal 21 und einen Verschlusszapfen 4 sowie ein Rastelement 1 , welch noch in den Anschlusskanal 21 eingeführt werden müssen, um den Anschlusskanal 21 zu verschliessen. Figur 4b zeigt die Installationsdose 2 mit eingesetztem Verschlusszapfen 4 und fixiertem Rastelement 1. Der Verschlusszapfen 4 kann kraftschlüssig im Anschlusskanal 21 befestigt sein und/oder an einer der Rastkrallen 11 einrasten. Figur 4c zeigt einen Querschnitt durch die Installationsdose 2. In den Figuren 4a-4c ist die Beabstandung zwischen dem proximalen Endbereich 10a des Rastelements 1 und dem Anschlusskanal 21 gezeigt.

## Patentansprüche

1. Eine Vorrichtung für Elektroinstallationen, aufweisend mindestens ein Rastelement (1) und mindestens einen Anschlusskanal (21) zum Einführen eines Installationsrohrs (3),
wobei das Rastelement (1) eine erste Rastkralle (11a) und eine zweite Rastkralle (11b) zur einrastenden Befestigung eines Installationsrohrs (3) im Anschlusskanal (21) aufweist, und
wobei das Rastelement (1) separat vom Anschlusskanal (21) ausgebildet ist, und das Rastelement (1) einen proximalen Endbereich (10a), einen distalen Endbereich (10c) und einen Abstützbereich (10b) aufweist,
wobei der Abstützbereich (10b) entlang einer Längsachse des Rastelements (1) zwischen dem proximalen Endbereich (10a) und dem distalen Endbereich (10c) angeordnet ist, und
wobei im eingeführten Zustand des Rastelements (1) in den Anschlusskanal (21) der distale Endbereich (10c) und/oder der proximale Endbereich (10a) mindestens teilweise von einer Innenfläche des Anschlusskanals (21) beabstandet ist;
wobei das Rastelement (1) eine Rohrseite (13a) und eine Kanalseite (13b) aufweist, wobei die erste Rastkralle (11a) und die zweite Rastkralle (11b) auf der Rohrseite (13a) angeordnet ist,
wobei die Kanalseite (13b) des proximalen Endbereichs (10a) relative zur Kanalseite (13b) des distalen Endbereichs (10c) in radialer Richtung des Anschlusskanals (21) einen Versatz aufweist.

2. Vorrichtung gemäss Anspruch 1, wobei der Versatz im Wesentlichen senkrecht zu einer Längsachse des Rastelements ausgebildet ist.

3. Vorrichtung gemäss einem der vorherigen Ansprüche, wobei das Rastelement (1) derart ausgestaltet ist, dass der proximale Endbereich (10a) und/oder der distale Endbereich (10c) in die Beabstandung zwischen distalem Endbereich (10c) und/oder proximalem Endbereich (10a) und der Innenfläche des Anschlusskanals (21) beim Befestigen des Installationsrohrs (3) im Anschlusskanal (21) mindestens teilweise ausweicht.

4. Vorrichtung gemäss einem der vorherigen Ansprüche, wobei die Kanalseite (13b) im Wesentlichen eben ausgestaltet ist und der distale Endbereich (10c) relativ zum proximalen Endbereich (10a) parallel verschoben ist.

5. Vorrichtung gemäss einem der vorherigen Ansprüche, wobei die Kanalseite (13b) im Wesentlichen gekrümmt ist und der distale Endbereich (10c) relativ zum proximalen Endbereich (10a) radial verschoben ist.

6. Vorrichtung gemäss einem der vorherigen Ansprüche, wobei das Rastelement (1) mindestens ein Klemmelement (12) aufweist, wobei das Rastelement (1) durch das Klemmelement (12) im Anschlusskanal (21) fixierbar ist, insbesondere wobei der Anschlusskanal (21) einen Vorsprung (28) aufweist und wobei das Klemmelement (12) und der Vorsprung (28) derart ausgestaltet sind, dass sie aneinander angreifen können und das Rastelement (1) im Anschlusskanal (21) fixieren,insbesondere wobei der Vorsprung (28) auf einer zu einer Einführungsöffnung hin gerichteten Seite eine stetige Gleitfläche aufweist und das Klemmelement (12) auf einer zum distalen Endbereich (10c) gerichteten Seite eine stetige Gleitfläche aufweist.

7. Vorrichtung gemäss einem der vorherigen Ansprüche, wobei in einem eingeführten Zustand des Rastelements (1) im Anschlusskanal (21) die erste Rastkralle (11a) in einem ersten Abschnitt (21a) und die zweite Rastkralle (11b) in einem zweiten Abschnitt (21b) des Anschlusskanals angeordnet ist.

8. Ein Rastelement (1) für eine Vorrichtung für Elektroinstallationen gemäss einem der Ansprüche 1-7 zur einrastenden Befestigung eines Installationsrohrs (3) in einem Anschlusskanal (21) aufweisend eine erste Rastkralle (11a) und eine zweite Rastkralle (11b),
wobei das Rastelement (1) separat von einem Anschlusskanal (21) ausgebildet ist, und
wobei das Rastelement (1) einen proximalen Endbereich (10a), einen distalen Endbereich (10c) und einen Abstützbereich (10b) aufweist,
wobei der Abstützbereich (10b) entlang einer Längsachse des Rastelement (1) zwischen dem proximalen Endbereich (10a) und dem distalen Endbereich (10c) angeordnet ist, und
wobei das Rastelement (1) derart ausgestaltet ist, dass im eingeführten Zustand des Rastelements (1) in einem Anschlusskanal (21) der distale Endbereich (10c) und/oder der proximale Endbereich (10a) von einer Innenfläche des Anschlusskanals (21) beabstandet ist,
wobei das Rastelement (1) einen Versatz zwischen dem distalen Endbereich (10c) und dem proximalen Endbereich (10a) aufweist,
wobei der Versatz auf der ersten und zweiten Rastkralle gegenüberliegenden Seite der Endbereiche ausgebildet ist.

9. Rastelement gemäss Anspruch 8, wobei der Versatz im Wesentlichen senkrecht zu einer Längsachse des Rastelements ausgebildet ist.

10. Rastelement gemäss einem der Ansprüche 8-9, wobei der Versatz im Wesentlichen senkrecht zu einer Breite des Rastelements ausgebildet ist.

11. Rastelement (1) gemäss einem der Ansprüche 8-10 , wobei das Rastelement (1) eine Plättchenform aufweist.

12. Ein Anschlusskanal für eine Vorrichtung für Elektroinstallationen gemäss einem der Ansprüche 1-7 aufweisend einen Rastelementbereich zur Aufnahme eines separaten Rastelements (1), wobei der Rastelementbereich einen ersten Rastelementbereich und eine zweiten Rastelementbereich aufweist, wobei der erste Rastelementbereich eingangsöffnungsseitig angeordnet ist und der zweite Rastelementbereich distal des ersten Rastelementbereichs angeordnet ist,
wobei eine Innenfläche des ersten Rastelementbereichs in radialer Richtung des Anschlusskanals (21) relativ zur Innenfläche des zweiten Rastelementbereichs verschoben ist.

13. Anschlusskanal (21) gemäss Anspruch 12, wobei der Anschlusskanal (21) einen Übergang der Innenfläche des ersten Rastelementbereichs zur Innenfläche des zweiten Rastelementbereichs aufweist, wobei der Übergang rechtwinklig und/oder schräg zu diesen Innenflächen ausgebildet ist und/oder kontinuierlich zwischen den beiden Innenflächen verläuft, insbesondere ist der Übergang derart ausgestaltet sind, dass er an einem Klemmelement (12) eines Rastelements (1) angreifen und ein Rastelement (1) im Anschlusskanal (21) fixieren kann, insbesondere kann der Übergang als Vorsprung ausgestaltet sein, wobei der Vorsprung (28) auf einer zur Einführungsöffnung (21) hin gerichteten Seite eine stetige verlaufende Gleitfläche aufweist.

14. Anschlusskanal (21) gemäss einem der Ansprüche 12-13, wobei beim Übergang vom ersten Rastelementbereich zum zweiten Rastelementbereich eine Aussparung (22) im zweiten Rastelementbereich angeordnet ist.

15. Anschlusskanal (21) gemäss einem der Ansprüche 12-14, wobei der Anschlusskanal (21) im Rastelementbereich eine Ausnehmung (29) aufweist, die im eingeführten Zustand eines Rastelements (1) im Anschlusskanal (21) anschlusskanalseitig des Rastelements (1) angeordnet ist, wobei die Ausnehmung (29) derart ausgestaltet ist, dass im eingeführten Zustand des Rastelements (1) im Anschlusskanal (21) ein Abstand zwischen dem Rastelement (1) und dem ersten Rastelementbereich und/oder einem zweiten Rastelementbereich ausgebildet ist.
